# EUROPEAN PATENT APPLICATION

(11) **EP 1 045 228 A1**
(43) Date of publication of application: **18.10.2000**
(21) Application number: 99500056.9
(22) Date of filing: 12.04.1999
(51) Int. Cl.: G01F 23/00, G08C 17/02

(54) **System measuring the contents of tanks via a transmitter/receiver of brief data by radio waves at short/long distance**

(71) Applicant: Imatel Sistemas s.l., 28011 Madrid (ES)
(72) Inventor: Chanca Robles, Andres Jaime, 28044- Madrid (ES); Molins Riera, Santioago, 28033- Madrid (ES); Chanca Robles, Alfredo, 28044-Madrid (ES)

(57) **Abstract**

It is a transmitter of brief data by radio waves, connected to a sensor located in the tank, reservoir or deposit that allows the user to know the level of liquid or gas in these tanks. It transmits the information to its corresponding receiver through a determined channel (fig.4), which allows the use of other systems in the same place. It is powered by a battery (fig.2) so that the transmitter can reduce its electric consumption. It only effectuates the transmission when necessary (fig.2) and periodically (fig.3) to prevent a loss of synchronisation with the receiver. The durability and reliability of the system is thus increased. The receiver is connected to a source of electric current (fig. 14), displaying the information in a simple and convenient way from the user's own home (fig 13-1) and at a distance that is adequate to the necessities of the installation. Its simplicity of installation, use and maintenance make this tool a product of low consumption and fabrication costs.

## Description

### Technical field of the invention.

The invention refers to a transmission system of brief data by radio waves at short/long distance, composed of an autonomous transmitter connected to the source of information (a sensor installed in a tank, reservoir or deposit), and a receiver connected to a source of electric current for display of the information transmitted.

### Status of the field.

Currently in the field, there exist transmitters and receivers of radio wave information, as well as sensors of all types to activate alarms, etc.

The invention is a combination of the three elements (radio sensors, emitter and receiver), applied to the field of measurement of liquids or gases contained in tanks, reservoirs or deposits, particularly in simple installations (small industries, communities, homes, etc.).

Until the invention, the field of brief information transmission indicating an alarm or the status of a system had been characterised by transmitters and receivers that are voluminous and therefore disproportionate for domestic uses. The transmission was effectuated through a cable, placed either above ground or under ground, with the corresponding costs of installation and visual impact. Moreover, the management of the transmitter/receiver, as well as the information contained, necessitated frequent attention from an expert, which also resulted in high costs of purchase and maintenance.

The object of the invention is to reduce and simplify both the transmitter and the receiver in order to obtain a continuous transmission of the information furnished by the sensor as well as an easier use, especially in the domestic field, without requiring recourse to an expert. Finally, the invention occupies a much smaller space and offers lower fabrication costs.

Its principal use is the measurement of the level of product contained in tanks, particularly fuels, while monitoring fuel consumption thanks to a simple display system that informs us, from our own home, when the product contained in the tank has reached its minimum level. The system can also be used for the opposite purpose, that is, for signalling when the fuel has reached its maximum level after the tank has been refilled.

In the past, the only means of monitoring substance control was by measuring the level in person either simply by looking or by using a measuring rod. Problems arose in installations whose tanks were buried or outside the consumer's home. The reading was complicated and inconveniences always arose when the time came to place an order for fuel to the distributor.

### Exposition of the invention.

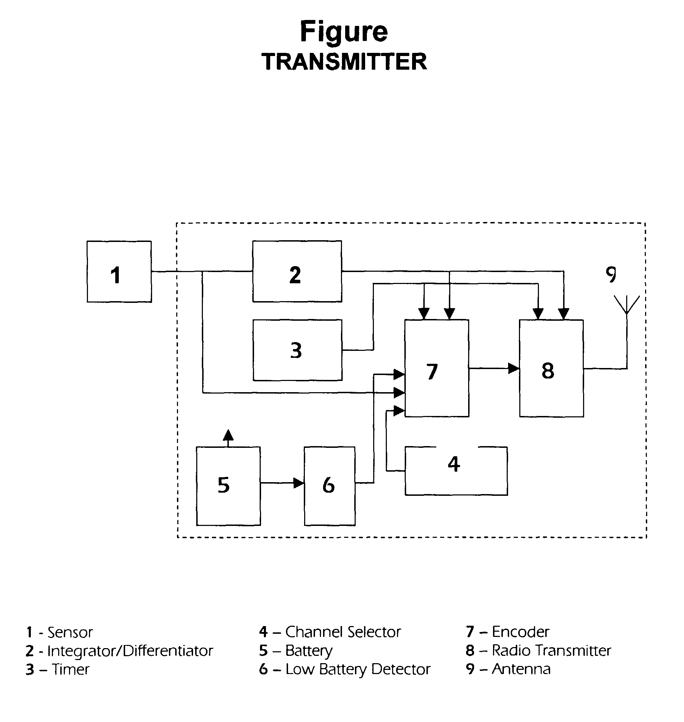

The invention consists of a transmission unit powered by a battery (fig. 5) and connected to the source of information (fig. 1), and of a reception unit (synchronised with the transmitter), installed and powered by any source of electric current (fig. 14).

Its principal use consists in checking the level of product contained in a tank, in a simple and reliable way, without needing to manipulate various gadgets, and from the user's own home.

The invention consists of a combination of the three following elements, which are characterised by their simplicity, small size and great usefulness. The figures mentioned refer to the corresponding parts of the invention:
**1°) A sensor installed in the tank:** The sensor (fig. 1) measures the level of the product in the tank and is installed via a system that is easy to use, durable and convenient.
**2°) Transmitter:** It is connected to the source of information, namely the sensor, and transmits the information.

The transmitter is small and set in a plastic box with a seal. It is installed close to the deposit and is powered by a simple battery (fig. 5).

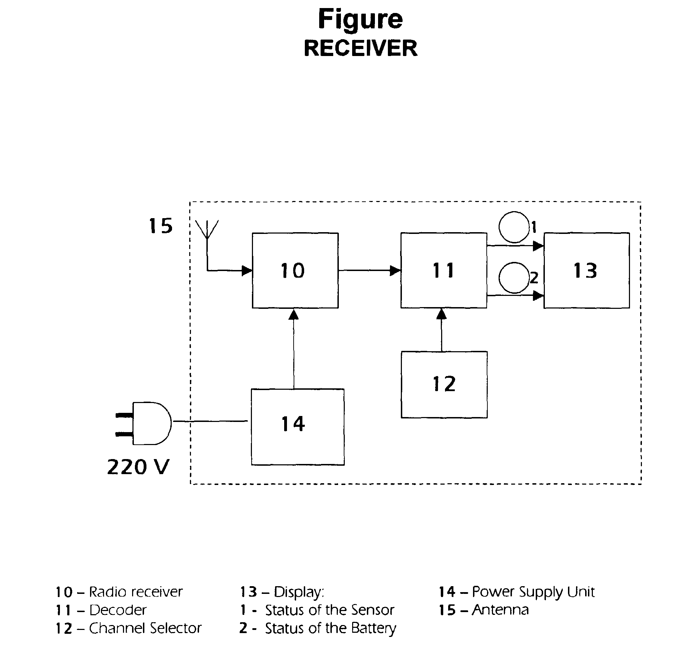

Information is transmitted when the sensor detects a change of information. Moreover, the sensor is equipped with a timer (fig. 3) which serves to periodically transmit the data (approximately every 15 minutes), in order to prevent any loss of synchronisation with the receiver that might result from a power outage or a change in the location of the receiver. This way, battery consumption is low, and the system has an endurance of 14 month (under normal working conditions for the battery)

The transmitter sends information via radio waves (fig. 8), at a determined frequency and range according to the radio module utilised.

Each frequency can have different transmission channels (fig. 4). The information transmitted includes a code for the identification of the channel by the receiver as well as protection against interference, a function that is filled by the encoding unit (fig. 7). Thus, various systems functioning simultaneously can coexist within a community, home or small industry without producing interference between them in the information transmitted.

**3°) Receiver:** The apparatus is small and must be connected to a source of electric current. It is installed at a determined distance, depending on the needs of the user and the radio module utilised (fig. 10).

The receiver is set in a box with a seal and bears an internal antenna in the circuit (fig. 15) which picks up the frequency signal from its corresponding transmitter and, depending on the information transmitted (fig. 7), displays the information and presents it in a simple and convenient way for the user (fig. 13-1). It also informs the system when the battery of the transmitter has reached its minimum level (fig. 13-2).

### Explanation of the installation of the invention.

### A.- Installation of the probe and cable.

The probe and its cable need to be passed through a blind lid on the top of the tank, or if none exists, the installer will have to bore a whole with a piercing tool through which he will place a stuffing box.

The probe and cable are passed through the lower part of the stuffing box. The probe and cable are equipped with a special buoy that will remain inside the tank, made of non-corrosive material designed for gas-oils, and of a counterpoise that allows it to remain in a vertical position. Once the buoy has been placed at a minimum distance from the bottom of the tank, this distance being called the "fuel minimum," the cable must be attached to the stuffing box by screwing its pressure head.

### B.- Installation of the transmitter and its connection to the probe and cable.

The two wires at the exterior end of the probe's cable must be connected to the strip of bolts of the transmitter that was designed for this purpose by attaching the cable to two bolts. (fig. 1). The system functions with a battery of 9 volts (fig. 5).

The transmitter is composed of the following units:
- **Data entry and field alarms, and internal alarms:**
   This unit obtains information from the field as well as internal information or parameters, and converts it into binary digital information which is then managed by the internal circuitry (fig. 2).
   Physically, it is composed of an imput of one contact that relays the opened/closed information, one detector of low battery that uses a zener diode, and one transistor with its corresponding polarisation components.
- **Integration/differentiation unit** (fig. 2): Allows any change in the information and/or alarms to activate the encoding units (fig. 7) and the radio-frequency modules (fig. 8) in order to effectuate the transmission.
   It is composed of two networks of RC components with diodes, which perform the differentiation and integration of the information and then activate the transmission.
- **Timer** (fig. 3): Periodically activates the encoding and radio-frequency units in order to prevent any loss of synchronisation of information with the receiving unit. It is composed of an oscillator with RC components and of an integrated comparator circuit in CMOS technology of low consumption. During the periods between transmissions, the transmitter unit disconnects its radio-frequency strip and encoding unit, thereby affording greater durability to the system.
- **Encoding the information for transmission** (fig. 7):
   Encoding is effectuated through an integrated circuit of CMOS technology of low consumption. Its function is to prepare the information so that the transmission by radio frequency is achieved in a reliable way. It also adds information so that the receiver can recognise its corresponding transmitter through, for example, four different channels configurable by jumper (A-B-C-D).
- **Radio-frequency strip** (fig. 8): Transmits the encoded information in the frequency of the spectrum that is authorised for this application. It is composed of an ASK hybrid circuit transmitter operating in the remote control frequency, and of its corresponding antenna. (fig. 9).

### C.- Receiver Unit.

Depending on the transmitter unit being used, the receiver unit can be placed at a distance of 40 meters indoor and 200 meters outdoors.

The receiver is composed of the following units:
- **The power supply unit** (fig. 14): It is connected directly to the supply of electric current. It is composed of a condenser with a voltage suited to the electric network, a rectifier bridge and an integrated regulator circuit, with filter condensers that prevent interference in the electric network.
- **Display Unit** (fig. 13): It is composed, for example, of three light diodes:
   . Green light: Presence of gas-oil, correct level.
   . Orange light: Need to change the battery of the transmitter (low battery).
   . Red light: Minimum level of gas-oil.
- **Radio-frequency Receiver Unit** (fig. 10): Receives the information transmitted, converts it into an internal format and sends it to the decoder unit.

This is effectuated by an ASK hybrid circuit receiver operating in the remote control frequency with its corresponding antenna (fig. 15).
- **Information Decoder Unit** (fig. 11): Takes the information from the radio-frequency receiver (fig. 10), received from its corresponding transmitter (fig. 8), and sends it to the display unit (fig. 13). This is achieved with only one integrated circuit of CMOS technology of low consumption.

## Claims

1. System measuring the contents of tanks via a transmitter/receiver of brief data by radio waves at short/long distance. The transmitter is connected to a sensor (fig. 1) located in the tanks, reservoirs or deposits. It measures the level of liquid or gas present in these tanks and displays it on the receiver with light-emitting diodes. The system is characterised by its transmission/reception, which is effectuated at a determined frequency (fig. 4) through an ASK hybrid circuit transmitter and receiver. These operate in the remote control frequency and are synchronised in a determined channel (fig.12) that is configured by jumper. The transmitter codifies the information into binary format (fig.7), adding other data to the information bits to codify the channel in order to protect it from interference. The receiver decodes the information (fig. 11) and displays it (fig. 13). Another characteristic is the transmitter's timer (fig.3) which is composed of an oscillator and of an integrated comparator circuit, which periodically activates the transmission in order to prevent a loss of synchronisation of the information. It also possesses a detector of low battery (fig.6), which transmits its status to the receiver. Another special characteristic is the small size of the transmitter and receiver due to the superficial assembly techniques used to assemble the parts. The transmitter operates with a 9-volt battery (fig.5), and the receiver is powered by electric current (fig. 14). The internal circuits of the transmitter/ receiver are made of CMOS technology and are of low consumption.

2. System measuring the contents of tanks via transmitter/receiver of brief data by radio waves at long/short distance, in accordance with article 1, by the information display unit (fig. 13), which appears in one or more of the ways exposed in the following articles.

3. System measuring the contents of tanks via transmitter/receiver of brief data by radio waves at long/short distance, in accordance with article 2, characterised by the presentation of the information on the receiver, which appears on a liquid crystal screen. This screen is controlled by the decoding unit and presents the information in the form of texts and/or graphics.

4. System measuring the contents of tanks via transmitter/receiver of brief data by radio waves at long/short distance, in accordance with article 2, characterised by the presentation of the information on the receiver, which is effectuated through an acoustic message such as, for example, a piezoelectric buzzer. The buzzer is controlled by the decoding unit and initiates the signal in different tones and cadences to inform the user of the different situations reported by the transmitter.

5. System measuring the contents of tanks via a transmitter/receiver of brief data by radio waves at long/short distance, in accordance with article 2, characterised by the presentation of the information on the receiver, which is effectuated by means of an actuating component, such as a relay or triac, which allows for an associated control with an external system. The relay or triac is controlled by the decoding unit so that its output corresponds to the signal required to activate the external unit.

6. System measuring the contents of tanks via a transmitter/receiver of short data by radio waves at short/long distance, in accordance with article 1, characterised by the separation/amplification of the channels in the encoding units (fig.7) and of the radio-frequency units (fig.8) in the transmitter, as well as the decoding units (fig. 11) and the radio-frequency units (fig.10) in the receiver, in one or more of the ways presented in the following articles.

7. System measuring the content of tanks via a transmitter/receiver of brief data by radio waves at long/short distance, in accordance with article 6, characterised by the amplification of the channels which is achieved through the amplification of the codification, by using a greater variation margin of the information bits that are not dependent, or by amplifying the total number of bits transmitted.

8. System measuring the contents of tanks via a transmitter/receiver of brief data by radio waves at long/short distance, in accordance with article 6, characterised by the separation of the channels which is achieved by changing the frequency at which each transmitter/receiver pair operates. The change in working frequency is achieved in the radio-frequency units incorporated in the transmitter and receiver, with separations by channel that allow the transmission of the bandwidth of the information signal given by the codifying unit.

9. System measuring the contents of tanks via a transmitter/receiver of brief data by radio waves at long/short distance, in accordance with article 6, characterised by a receiver capable of receiving and differentiating between the information given by the different transmitters, depending on the channel or frequency in which they transmit information. Another characteristic is the presence of one or more decoding units (fig. 11), or one or more radio-frequency units (fig. 10).

10. System measuring the contents of tanks via a transmitter/receiver of brief data by radio waves at long/short distance, in accordance with article 1, characterised by a receiver that generates alarms signalling non-reception of the expected transmission, or the reception of faulty information. Another characteristic is that the receiver includes a timer set for a length of time superior to that of the periodical transmissions. It is reinitiated each time it receives a transmission and an alarm is produced if the timer expires. Thus, if the information bits received are illegible for the sensor/transmitter, the decoder unit will detect the situation and generate the corresponding alarm.

11. System measuring the contents of tanks via a transmitter/receiver of brief data by radio waves at long/short distance, in accordance with article 1, characterised by the transmitter which includes an analogical/digital converter so that the information transmitted is generated by analogical sensors such as a weight sensor that will determine the volume of product by weighing it, or a thermoresistance that detects changes in temperature, or a needle indicator.
